# EUROPÄISCHE PATENTSCHRIFT

(11) **EP 4 052 962 B1**
(45) Veröffentlichungstag und Bekanntmachung des Hinweises auf die Patenterteilung: **26.07.2023**
(21) Anmeldenummer: 21160556.3
(22) Anmeldetag: 03.03.2021
(51) Int. Cl.: B60P 3/00, B65G 1/10, B66C 1/22, B66C 17/00, B66C 13/22

(54) **LAGERANORDNUNG**
SHELVING ARRANGEMENT
AGENCEMENT D'ÉTAGÈRE

(43) Veröffentlichungstag der Anmeldung: 07.09.2022
(73) Patentinhaber: Jungheinrich Aktiengesellschaft, 22047 Hamburg (DE)
(72) Erfinder: Seemüller, Stefan, 85716 Unterschleißheim (DE); Leiking, Lars, 85435 Erding (DE); Cremer, Holger, 40211 Düsseldorf (DE); Alberg, Anatolij, 64319 Pfungstadt (DE); Cavelius, Jörg, 61118 Bad Vilbel (DE)
(74) Vertreter: Keil & Schaafhausen Patentanwälte PartGmbB

(56) Entgegenhaltungen:
- CN-A- 107 032 033
- DE-A1- 4 436 544
- DE-A1-102019 112 408
- US-A1- 2006 216 966
- US-A1- 2017 015 497

## Beschreibung

Die vorliegende Erfindung betrifft eine Lageranordnung mit einem Regalaufnahmeraum und einem Bewegungsraum, wobei der Regalaufnahmeraum wenigstens ein bewegbares Regal aufweist, und wobei der Bewegungsraum eine Bewegungsvorrichtung umfasst, die mit dem wenigstens einem Regal interagiert, wobei der Bewegungsraum in Schwerkraftrichtung oberhalb des Regalaufnahmeraums angeordnet ist, wobei die Bewegungsvorrichtung mit dem wenigsten einen Regal lösbar in Eingriff steht, wobei die Bewegungsvorrichtung eine zwangsgeführte Hubeinheit aufweist die entlang zweier winklig, vorzugsweise im Wesentlichen rechtwinklig, zueinander angeordneter Bewegungsachsen bewegbar ist.

DE 10 2016 010 288 A1 und DE 10 2018 105 778 B4 beschreiben Lageranordnungen, bei denen Regale durch Transportfahrzeuge bewegt werden, wobei die Transportfahrzeuge auf dem Boden fahren, und die Regale somit von unten anheben.

DE 10 2006 025 876 A1 beschreibt einen Container, der ein kraftbetriebenes Lagersystem beherbergt, dessen Lastaufnahmemittel aus mehreren, über mindestens einen Antriebsstrang miteinander verbundenen Regalen, mit jeweils mehreren übereinander angeordneten Ablageböden, ausgeführt sind, die horizontal umlaufen. Dabei handelt es sich bei der Anordnung um Regale, die umlaufend miteinander verbunden sind.

DE 44 36 544 A1 beschreibt ein mobiles Lagersystem, das zur Verwendung auf Baustellen zur Bereitstellung von Lagerteilen verwendet werden kann. Dazu sind in einem Lagerraum in Längs- oder Querrichtung verfahrbar ausgebildete Lagersegmente zur Aufnahme von Lagerteilen angeordnet.

CN 107032033 A beschreibt ein Verfahren zur intelligenten Lagerung von Gütern und ein entsprechendes Lagersystem. Dabei werden bewegliche Regale verwendet, um die Waren oder die Behälter auf den beweglichen Regalen durch Handhabungsroboter einzulagern und zu verwalten. Dabei ist der Handhabungsroboter auf Schienen oberhalb der beweglichen Regale angeordnet.

US 2017/0015497 A1 beschreibt ein modulares Containersystem für Baumaterialien und ein Verfahren zur Bereitstellung derselben. Dazu weist das System vier Container auf, von denen jeder einen Rahmen, Seiten, ein Dach und eine Tür hat, wobei die Container so konfiguriert sind, dass vier der Container auf einem Traktoranhänger platziert werden können. Die Container weisen eine Vielzahl von Schienen, die von den Rahmen getragen werden, auf und im inneren des Containers angeordnet sind. Dabei können die Schienen Befestigungspunkte aufweisen, die zur Befestigung von Gegenständen im inneren jedes Containers dienen. Weiterhin ist eine Vielzahl von Regalen an einer Seite des Innenraumes jeden Containers angebracht, um Materialien aufzunehmen und zu transportieren. Es ist eine Tür vorgesehen, um einen unbefugten Zugriff zu verhindern.

US 2006/0216966 A1 beschreibt ein Zustellfahrzeug und eine Methode dieses effizient zu beladen und bestellte Produkte zu einem Empfänger zuzustellen. Das Zustellfahrzeug weist ein Fahrzeug, eine Verteilerbox und Auftragskisten auf. Die Verteilerbox kann aus dem Fahrzeug entnommen werden, wobei die Verteilerbox entgegen der Schwerkraftrichtung herausgehoben wird. Außerhalb des Fahrzeuges kann die Verteilerbox mit den Auftragskisten beladen werden. Nachdem die Verteilerbox mit Auftragskisten beladen wurde, kann die Verteilerbox wieder in das Fahrzeug integriert werden. Dazu wird die Verteilerbox durch einen Kran von oben durch ein offenes Dach des Fahrzeuges in das Fahrzeug gehoben. Um von außerhalb des Fahrzeugs auf die Auftragskisten zuzugreifen, weist das Fahrzeug Türen auf, durch die eine Zustellperson auf die Auftragskisten zugreifen kann.

DE 10 2019 112 408 A1 beschreibt einen Brückenkran zur Herstellung eines Zugriffs auf eingelagerte Einheiten eines Blocklagers.

Damit Regale der oben beschriebenen Anordnungen verschoben werden können, müssen die Regale durch Transportfahrzeuge bewegt werden, wobei die Trans- portfahrzeuge unterhalb des Regals gelangen müssen, um das Regal anzuheben. Hierzu ist eine aufwendige Programmierung, Steuerung und Positionierung der Transportfahrzeuge notwendig, sodass das jeweilige Transportfahrzeug eine pas- sende Position einnehmen kann, um das Regal hochzuheben, ohne dass dieses umfällt. Weiterhin muss der Boden stets frei von Gegenständen sein, da die Transportfahrzeuge, die mit einem Regal beladen sind, bei einer Überfahrt sol- cher Gegenstände ins Kippen geraten können, wobei das geladene Regal umfallen kann. Hierbei sind nicht nur Gegenstände problematisch, sondern auch Medien wie Öle, Wasser, Kühlmittel oder dergleichen. Gerät ein Transportfahrzeug auf solche Medien, wird die Traktion zwischen dem Antrieb des Transportfahrzeugs und dem Boden reduziert, sodass das Regal nicht sicher transportiert werden kann.

Die in DE 10 2006 025 876 A1 beschriebene Lösung des umlaufenden Regals umgeht zwar die Problematiken der Transportfahrzeuge, jedoch müssen Gegenstände in den fest installierten umlaufenden Regale manuell eingelagert werden, was zeit- und arbeitsintensiv ist.

Der Erfindung liegt die Aufgabe zugrunde, einen sicheren und flexiblen Transport von Regalen zu erreichen.

Diese Aufgabe wird durch eine Lageranordnung mit den Merkmalen des Anspruchs 1 gelöst.

Weitere erfindungsgemäße Ausgestaltungen sind in den Unteransprüchen beschrieben.

Die Lageranordnung der eingangsgenannten Art ist dadurch gekennzeichnet, dass die Bewegungsvorrichtung mit dem wenigstens einen Regal lösbar in Eingriff steht. Dadurch kann die Bewegungsvorrichtung, die in einem Bewegungsraum oberhalb des Regalaufnahmeraums angeordnet ist, mit dem Regal interagieren, wobei diese Interaktion in dem Regalaufnahmeraum und in dem Bewegungsraum durchgeführt wird. Die Interaktion umfasst das Aufnehmen, Bewegen und Absetzen des Regals durch die Bewegungsvorrichtung. Das hat den Vorteil, dass Verschmutzungen des Untergrundes wie beispielsweise herausgefallene Gegenstände aus den Regalen oder Flüssigkeiten wie Öl, Wasser oder dergleichen überfahren werden, sodass solche Verunreinigungen des Untergrundes keinen Einfluss auf den Transport beziehungsweise eine Bewegung der Regale haben. Weiterhin interagiert die Bewegungsvorrichtung mit dem Regal beispielsweise in einem oberen Bereich des Regals, sodass das Regal nicht umfallen kann.

Der Regalaufnahmeraum wird in einem Ausführungsbeispiel durch eine Öffnung mit Regalen bestückt, wobei ein Regal beispielsweise auf eine Übergabeposition innerhalb eines Regalaufnahmeraums überführt wird, sodass die Bewegungsvorrichtung das Regal von dieser Übergabeposition aus in den Regalaufnahmeraum überführt. Weiterhin kann über die Übergabeposition ein Regal aus dem Regalaufnahmeraum entnommen werden. In diesem Ausführungsbeispiel können dadurch Regale außerhalb des Regalaufnahmeraumes bestückt werden, um die Regale anschließend in den Regalaufnahmeraum zu überführen.

In einem weiteren Ausführungsbeispiel bewegt die Bewegungsvorrichtung die Regale innerhalb des Aufnahmeraumes, wobei die Regale entsprechend einer vorgegebenen Sortierung geordnet werden können. Dabei bewegt die Bewegungsvorrichtung jeweils ein einzelnes Regal, sodass die Sortierung der Regale iterativ durchgeführt wird. Diese Sortierung wird beispielsweise durch ein sogenanntes Schiebepuzzleprinzip, auch Schiebelagerprinzip, durchgeführt, wobei diesem Prinzip die maximale Anzahl der im Regalaufnahmeraum befindlichen Regale der Maximalkapazität minus einem oder mehreren Regalen entspricht. Das bedeutet in diesem Ausführungsbeispiel, dass ein oder mehr Regalplätze freigehalten werden. Zur Sortierung der Regale wird ein Regal, das benachbart zu dem freien Regalplatz ist, in diesen verschoben. Dadurch entsteht ein neuer freier Regalplatz, auf dem beispielsweise ein anderes Regal verschoben werden kann. Dies ermöglicht eine Sortierung bei größtmöglicher Raumausbeute des Regalaufnahmeraumes.

In einem weiteren, alternativen Ausführungsbeispiel sind alle Regalstellplätze des Regalaufnahmeraumes mit Regalen belegt, sodass ein maximaler Füllgrad des Regalaufnahmeraumes erreicht wird.

Durch die lösbare Anordnung der Bewegungsvorrichtung mit einem Regal, kann die Bewegungsvorrichtung zum Bewegen des Regals mit diesem Eingriff kommen. Ist die Bewegung des Regals durch die Bewegungsvorrichtung abgeschlossen, löst sich die Bewegungsvorrichtung von dem Regal, sodass die Bewegungsvorrichtung frei verfahrbar ist, um beispielsweise mit einem anderen Regal zu interagieren. Dadurch kann die Bewegungsvorrichtung mit verschiedenen Regalen interagieren. Dadurch wird eine hohe Flexibilität erreicht.

Die Bewegungsvorrichtung weist eine zwangsgeführte Hubeinheit auf, die entlang zwei winklig, vorzugsweise im Wesentlichen rechtwinklig, zueinander angeordneten Bewegungsachsen bewegbar ist, wobei die Hubeinheit senkrecht zu den beiden Bewegungsachsen bewegbar ist. Durch diese Anordnung kann die Hubeinheit über jeden Regalplatz eines Regalaufnahmeraumes bewegt werden. Die Zwangsführung ermöglicht, dass jederzeit bekannt ist, in welcher Position sich die Hubeinheit befindet. Weiterhin wird die Hubeinheit geführt und ist somit schlupffrei bewegbar. Dabei kann die Zwangsführung beispielsweise eine Positioniereinheit aufweisen. Der Winkel der Bewegungsachsen kann an den Grundriss des Regalaufnahmeraumes angepasst werden. In einem beispielsweise rechteckigen Aufnahmeraum sind die Bewegungsachsen zueinander rechtwinklig angeordnet. Dabei entspricht rechtwinklig im Wesentlichen einem 90°-Winkel.

Die Hubeinheit, die senkrecht zu den beiden Bewegungsachsen bewegbar ist, erlaubt ein Anheben des wenigstens einen Regals in Hubrichtung, wobei die Hubrichtung vorzugsweise entgegen der Schwerkraftrichtung angeordnet ist. Zum Absetzen des Regals bewegt die Hubeinheit das Regal in Schwerkraftrichtung nach unten.

Der Hubweg der Hubeinheit kann in einem Ausführungsbespiel auf eine definierte Länge begrenzt werden, sodass die Hubeinheit entsprechend groß oder klein dimensioniert werden kann. Dies erlaubt eine leichte Hubeinheit, wodurch die Kosten geringgehalten werden.

Das wenigstens eine Regal weist eine Aufnahmegeometrie auf, die mit einer Hubgeometrie der Hubeinheit der Bewegungsvorrichtung lösbar zusammenwirkt. Zur Bewegung des Regales werden die Aufnahmegeometrie und die Hubgeometrie der Hubeinheit in Eingriff gebracht. Durch diesen Eingriff interagiert die Bewegungsvorrichtung mit dem Regal. Dabei wird der Eingriff durch eine Bewegung der Bewegungsvorrichtung insbesondere der Hubgeometrie der Hubeinheit erreicht. Durch diese Anordnung werden die Kosten geringgehalten, da auf weiter Aktuatoren verzichtet werden kann.

In einem Ausführungsbeispiel interagieren die Aufnahmegeometrie und die Hubgeometrie durch einen Form-, Kraft-, oder Reibschluss miteinander, der zeitweise besteht. Das bedeutet, er kann gebildet und aufgelöst werden. Dazu wird durch eine Bewegung der Bewegungsvorrichtung insbesondere der Hubgeometrie der Hubeinheit ein Formschluss mit der Aufnahmegeometrie des Regals erreicht. Sobald der Formschluss hergestellt ist, kann das Regal bewegt werden. Der Formschluss kann durch eine Bewegung der Bewegungsvorrichtung, insbesondere der Hubgeometrie der Hubeinheit, auch wieder aufgelöst werden. Der Formschluss erlaubt einen sicheren Transport der Regale, denn durch den Formschluss wird eine relative Verschiebung zwischen der Aufnahmegeometrie und der Hubgeometrie vermieden.

Vorzugsweise ist die Hubgeometrie in Schwerkraftrichtung unterhalb der und/oder unter die Aufnahmegeometrie bewegbar. Dies ermöglicht durch ein Anheben der Hubgeometrie entgegen der Schwerkraftrichtung ein Anheben des Regals durch die daran angebrachte Aufnahmegeometrie. Dadurch wird die Anordnung einfach gehalten, was weiterhin die Kosten geringhält.

Vorzugsweise weist die Hubgeometrie eine Suchgeometrie und die Aufnahmegeometrie eine Findegeometrie auf. Durch die Suchgeometrie und die Findegeometrie wird die Hubgeometrie relativ zur Aufnahmegeometrie eindeutig positioniert. Dadurch kann das Regal zum einen an einer definierten Position abgestellt werden und zum anderen kann das Regal durch diese Anordnung an definierten Aufnahmepunkten der Aufnahmegeometrie angehoben und bewegt werden. Dies ermöglicht einen sicheren Transport und eine sichere Bewegung des Regals.

In einer Ausführungsform ist die Findegeometrie der Aufnahmegeometrie als trichterförmige Anordnung ausgebildet, in die die Suchgeometrie eingeführt werden kann. Die Suchgeometrie ist dazu beispielsweise als Dorn insbesondere mit einer Spitze ausgebildet. Dies ermöglicht eine einfache Einführung der Suchgeometrie in die Findegeometrie.

Die Aufnahmegeometrie weist eine vom Regal nach außen angeordnete erste Sicherungsgeometrie auf, die mit einer zweiten Sicherungsgeometrie einer Aufnahmegeometrie eines benachbarten Regals in einer Sicherungsposition lösbar in Eingriff steht. Die Sicherungsposition eines Regals beschreibt eine Position, in der die Sicherungsgeometrie eines ersten Regals mit der Sicherungsgeometrie eines zweiten Regals in Eingriff steht. Die Sicherungsgeometrien befinden sich in dieser Sicherungsposition im lösbaren Eingriff. Der Eingriff kann durch beispielsweise eine Hubbewegung des Regals durch die Hubeinheit aufgelöst werden. In der Sicherungsposition stabilisieren sich die Regale gegenseitig, wodurch ein unbeabsichtigtes Verkippen oder Umfallen einzelner Regale vermieden wird.

In einem Ausführungsbeispiel weist die erste Sicherungsgeometrie einen Vorsprung auf, der mit einer Ausnehmung der zweiten Sicherungsgeometrie in der Sicherungsposition in Eingriff steht. Dazu sind die Sicherungsgeometrien außen an der jeweiligen Aufnahmegeometrie angeordnet. Der Vorsprung und die Ausnehmung der jeweiligen Sicherungsgeometrie stellen einfache, leicht zu fertigende Ausprägungen dar, die kostengünstig sind.

In einer weiteren Ausführungsform ist der lösbare Eingriff der ersten Sicherungsgeometrie mit der zweiten Sicherungsgeometrie durch eine schwalbenschwanzförmige Verbindung realisiert. Dadurch wird in der Sicherungsposition eine stabile Verhakung in mehreren Raumrichtungen der benachbarten Regale ermöglicht.

Vorzugsweise weist wenigstens eine Begrenzung des Regalaufnahmeraumes wenigstens eine Haltegeometrie auf, die mit einer Sicherungsgeometrie des wenigstens einen Regals zusammenwirkt. Eine Begrenzung des Regalaufnahmeraumes kann beispielsweise durch eine Wand, einen Zaun, eine Tür oder dergleichen ausgebildet sein. Innerhalb dieser Begrenzung ist der Regalaufnahmeraum angeordnet. An der Seite der Begrenzung, die in Richtung des Regalaufnahmeraumes zeigt, ist wenigsten eine Haltegeometrie angeordnet, die mit einer Sicherungsgeometrie des wenigstens einen Regals zeitweise zusammenwirkt. Dabei ist die Haltegeometrie an die Sicherungsgeometrie angepasst. Dadurch wird das wenigstens eine Regal gegen Umfallen oder einer Bewegung in Relation zu der Begrenzung des Regalaufnahmeraumes gesichert. Diese Anordnung verhindert eine ungewollte Bewegung des Regals. Weiterhin ist durch diese Anordnung die Position dieses Regals definiert. Dies vereinfacht die Ordnung und die Handhabung der Regale. Durch die Sicherungen des Regals an der Haltegeometrie der Begrenzung durch die Sicherungsgeometrie wird weiterhin verhindert, dass sich dieses Regal verschiebt und somit die Bewegung eines weiteren Regals durch die Bewegungseinrichtung beeinträchtigt.

Vorzugsweise ist die Sicherungsgeometrie eines ersten Regals in einer Hubposition, in der das Regal durch die Hubeinheit angehoben ist, von der Sicherungsgeometrie und/oder Aufnahmegeometrie eines zweiten Regals in einer Sicherungsposition vorbei bewegbar. Das zweite Regal befindet sich also in einer oben beschriebenen Sicherungsposition, während das erste Regal durch die Hubeinheit angehoben ist und sich somit in einer Hubposition befindet.

In einer Ausführungsform weisen dazu Holme der Regale eine Aussparung unterhalb der Aufnahmegeometrie und/oder Sicherungsgeometrie auf, wobei die Aussparung sich von außen in Richtung des jeweils benachbarten Holmes und/oder in Richtung der Mitte des Regals erstreckt.

In einem weiteren Ausführungsbeispiel ist die Hubposition des ersten Regals durch eine begrenzte Hubhöhe festgelegt. Dadurch kann die beispielsweise beschriebene Ausnehmung an dem Regal beziehungsweise dessen Sicherungsgeometrie und/oder Aufnahmegeometrie in Schwerkraftrichtung begrenzt werden. Durch diese Anordnung kann das erste Regal, das in einer Hubposition angeordnet ist, am zweiten Regal vorbei bewegt werden, ohne dass Teile der Sicherungsgeometrie/Aufnahmegeometrie des zweiten Regales die Bewegung des ersten Regales behindert.

Vorzugsweise weist das wenigstens eine Regal einen rechteckigen Grundriss mit einer Längenrichtung und einer Breitenrichtung auf, wobei in jedem Eckbereich ein Holm vorgesehen ist, wobei an wenigstens einem Holm in dessen in Schwerkraftrichtung oberen Bereich die Aufnahmegeometrie angeordnet ist. Die Längenrichtung und die Breitenrichtung erstrecken sich jeweils senkrecht zur Ausdehnungsrichtung eines Holmes. Dabei sind die Längenrichtung und die Breitenrichtung senkrecht zueinander angeordnet. Durch die Anordnung der Aufnahmegeometrie in einem oberen Bereich des Holmes wird es der Hubvorrichtung beziehungsweise der Hubgeometrie ermöglicht mit dieser Aufnahmegeometrie zu interagieren. Dadurch, dass die Aufnahmegeometrie an dem oberen Bereich angeordnet ist, wird ein Umfallen des Regales in einer Hubposition vermieden.

Beispielsweise sind an den Holmen Regalböden angeordnet, die in Schwerkraftrichtung beabstandet zueinander angeordnet sind. Auf diesen Regalböden können Lagergüter angeordnet sein, wobei die Lagergüter von den Regalböden entnommen und auf diesen abgelegt werden können.

Vorzugsweise erstreckt sich die Aufnahmegeometrie in Längenrichtung und/oder in Breitenrichtung in Richtung auf einen der benachbarten Holme, bevorzugt in Längenrichtung und Breitenrichtung, besonders bevorzugt im Wesentlichen in Richtung der Mitte des Regals. Durch diese Anordnung steht ein Teil der Aufnahmegeometrie entlang der Längenrichtung und/oder Breitenrichtung insbesondere zum Inneren des Regals vor. Dies erlaubt einen Eingriff der Hubgeometrie in der Aufnahmegeometrie. Dabei zeigt die Aufnahmegeometrie in Richtung zumindest eines der benachbarten Holme. Weiterhin ermöglicht diese Anordnung einen Vorsprung, der von unten durch die Hubgeometrie angefahren werden kann. Diese einfache Geometrie ist kostengünstig.

Vorzugsweise überlappt ein Teil der Hubgeometrie einen Teil der Aufnahmegeometrie des wenigstens einen Regals in der Hubposition. Durch diese Anordnung kann die Hubgeometrie mit der Aufnahmegeometrie interagieren, sobald eine entsprechende Position der Bewegungsvorrichtung insbesondere der Hubeinheit und Hubgeometrie relativ zu dem Regal erreicht ist. Durch die Überlappung wird weiterhin der Einsatz weiterer Aktuatoren, Stellmotoren oder sonstigen Stellgliedern vermieden, sodass die Anordnung mit geringen Aufwand realisierbar ist.

Vorzugsweise ist die Hubgeometrie zwischen zwei benachbarte Holmen des wenigstens einen Regals bewegbar. Durch diese Anordnung befindet sich die Hubgeometrie unterhalb der Aufnahmegeometrien von Regalen, die in einer Sicherungsposition angeordnet sind. Dadurch wird ein Absenken der Hubgeometrie im Rahmen der Überführung eines Regals von der Sicherungsposition in eine Hubposition vermieden, da die Hubgeometrie bereits zwischen den Holmen und unterhalb der Aufnahmegeometrie angeordnet und somit passend positioniert ist. Dadurch kann die Zeit der Überführung eines Regales von einer Sicherungsposition in eine Hubposition und umgekehrt reduziert werden.

Vorzugsweise weist der Boden des Regalaufnahmeraumes wenigstens eine Sicherungsvorrichtung für das wenigstens eine Regal auf. Durch diese Sicherungsvorrichtung kann das Regal gegen eine ungewollte Bewegung aus einer Sicherungsposition heraus gesichert werden. Dies verhindert ein Umfallen beziehungsweise eine Bewegung des Regals, wodurch die Sicherheit des Regalaufnahmeraumes beziehungsweise der Lageranordnung erhöht wird.

In einem Ausführungsbeispiel weist die Sicherungsvorrichtung eine Anordnung auf, die eine Verschiebung beziehungsweise Bewegung des Regales senkrecht zur Schwerkraftrichtung verhindert. Entgegen der Schwerkraftrichtung kann das Regal durch die Hubeinheit in die Sicherungsvorrichtung eingesetzt und von dieser entnommen werden.

Vorzugsweise ist die Hubeinheit auf Linearachsen bewegbar. Durch Linearachsen, die beispielsweise auch eine Messeinrichtung aufweisen, lässt sich die Hubeinheit definiert bewegen. Weiterhin ermöglicht dies eine schnelle und einfache Ausgestaltung der Bewegungsmöglichkeiten der Hubeinheit. Dadurch werden die Entwicklungskosten und Fertigungskosten geringgehalten.

Vorzugsweise ist die Lageranordnung mobil. Dies ermöglicht einen Einsatz der Lageranordnung an verschiedenen Orten und unter verschieden Umständen. Dadurch wird eine hohe Flexibilität der Lageranordnung erreicht.

In einem Ausführungsbeispiel kann die Lageranordnung beispielsweise in einem Container angeordnet sein, sodass an einem Zielpunkt der Container beziehungsweise die Regale in einer entsprechenden Reihenfolge ausgeladen werden können, wobei sich die Ausladereihenfolge von der Einladereihenfolge unterscheiden kann. Dabei werden die Regale während des Transportes durch die Bewegungsvorrichtung bewegt und entsprechend umsortiert. Dies reduziert die Entnahmezeit.

In einem weiteren Ausführungsbeispiel kann die Lageranordnung in einem Fahrzeug, insbesondere in einem Zustellfahrzeug, angeordnet sein. Dadurch können Regale mit Lagergut beziehungsweise Transportgut vor Beginn einer Fahrt in das Zustellfahrzeug eingelagert werden. Die Bewegungsvorrichtung überführt die Regale von einer Übergabeposition über die Regale in den Regalaufnahmeraum eingeführt und entnommen werden können hin zu einer definierten Regalposition innerhalb des Regalaufnahmeraumes. Während das Zustellfahrzeug unterwegs zu einem Ziel ist, werden die Regal so sortiert, sodass der Fahrer des Zustellfahrzeuges direkt auf das auszutragende Lagergut, Transportgut beziehungsweise Paketgut, wie beispielsweise Pakete, zugreifen kann. Hierdurch entfällt ein zeitaufwendiges Suchen des auszuliefernden Lagergutes.

Auf dem Weg zu einem nächsten Zielpunkt werden die Regale weiterhin so geordnet, dass ein entsprechendes Paket aus einem Regal entnommen werden kann. Die Lageranordnung ist dazu in einem Transportraum des Zustellfahrzeuges angeordnet.

Innerhalb des Transportraumes befindet sich ein Bedienraum, der es erlaubt, auf eine oder mehrere Regalplätze innerhalb des Regalaufnahmeraumes zuzugreifen. Zum Ausliefern platziert die Bewegungsvorrichtung jeweilige Regale auf diesen Regalplätzen, sodass der Fahrer aus diesen Regalen Pakete entnehmen kann. Auch hier entfällt eine aufwendige Suche des Lagergutes durch den Fahrer.

In einem weiteren Ausführungsbeispiel befindet sich in dem Transportraum des Fahrzeuges neben der Lageranordnung ein manuelles Lagerplatzsystem. In diesem manuellen Lagerplatzsystem kann Sperrgut oder sonstige Transportgüter verstaut werden. Dadurch ist das Zustellfahrzeug flexibler einsetzbar. Zum Auslagern der Regale aus dem Zustellfahrzeug beispielsweise am Ende einer Tour, zurück am Transportzentrum, werden die Regale auf die Übergabeposition durch die Bewegungsvorrichtung innerhalb des Regalaufnahmeraumes bewegt, wobei von dieser Regalauslagerposition das Regal manuell durch einen Fahrer oder eine andere Position aus dem Regalaufnahmeraum entnommen werden kann. Dies erlaubt eine schnelle Entnahme der Regale aus dem Zustellfahrzeug.

In einem weiteren Ausführungsbeispiel weisen die Regale Rollen auf, sodass die Regale rollbar sind. Dies ermöglicht eine händische Bewegung der Regale außerhalb des Regalaufnahmeraumes, beispielsweise durch Personen. Dadurch wird eine hohe Flexibilität erreicht.

Die Erfindung wird im Folgenden anhand eines bevorzugten Ausführungsbeispiels in Verbindung mit der Zeichnung beschrieben. Hierin zeigen:
- Fig. 1: Eine schematische Darstellung eines Fahrzeuges mit einer Lageranordnung,
- Fig. 2: eine Anordnung von Regalen,
- Fig. 3: eine schematische Draufsicht auf ein Regal,
- Fig. 4: eine schematische Darstellung der Bewegungsvorrichtung,
- Fig. 5: eine schematische seitliche Ansicht einer Hubeinheit,
- Fig. 6: eine Positionierung der Hubeinheit und der Hubgeometrie relativ zu einem bewegenden Regal,
- Fig. 7A - 7D: einen Ein- und Auslagervorgang eines Regales in ein Zustellfahrzeug,
- Fig. 8A - 8D: einen schematisch dargestellten Prozess des Schiebelagersystems,
- Fig. 9: eine Draufsicht auf ein Zustellfahrzeug mit der Lageranordnung,
- Fig. 10: eine weitere Ausführungsform der Lageranordnung in einem Zustellfahrzeug.

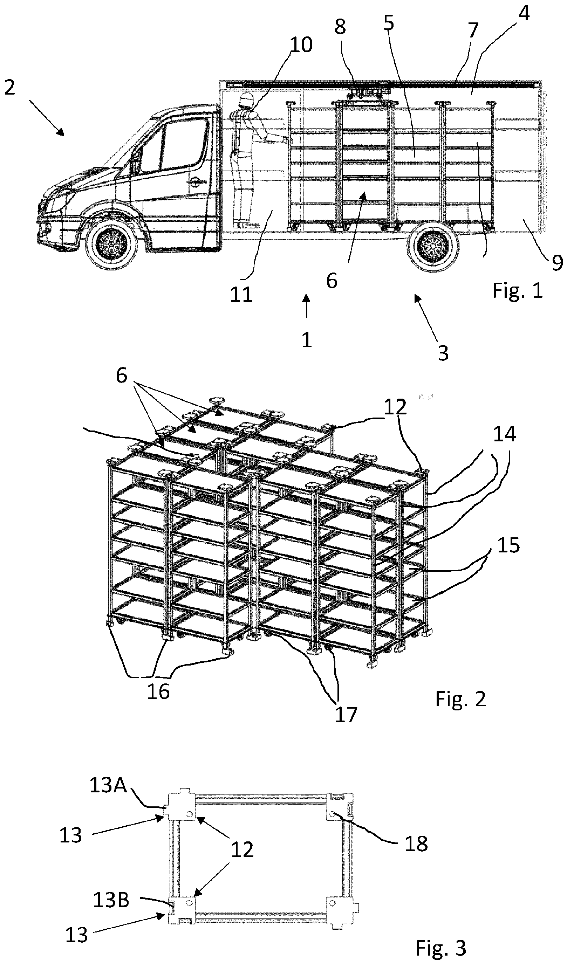

Fig. 1 zeigt ein Fahrzeug 1 mit einem Fahrerhaus 2 und einem Transportraum 3. In dem Transportraum 3 sind ein Regalaufnahmeraum 5 und ein Bewegungsraum 4 angeordnet. In dem Regalaufnahmeraum 5 sind mehrere Regale 6 angeordnet. In dem Bewegungsraum 4 ist eine Bewegungsvorrichtung 7 mit einer Hubeinheit 8 vorgesehen. Weiterhin weist der Transportraum 3 ein manuelles Lagerplatzsystem 9 auf. Ein Fahrer bedient das Fahrzeug 1 und die Lageranordnung. Damit der Fahrer 10 auf den Regalaufnahmeraum 5 zugreifen kann, ist zwischen dem Fahrerhaus 2 und dem Regalaufnahmeraum 5 ein Bedienraum 11 vorgesehen, von welchem der Fahrer 10 aus auf den Regalaufnahmeraum 5 beziehungsweise das darin befindliche Regal 6 zugreifen kann. Der Fahrer 10 kann durch einen nicht dargestellten Durchgang vom Fahrerhaus 2 in den Bedienraum 11 gelangen. Weiterhin kann der Bedienraum 11 eine Tür aufweisen, durch die der Fahrer 10 aus dem Bedienraum 11 nach Außen gelangen kann. Dies ist von Außen in den Bedienraum 11 ebenso möglich.

Fig. 2 zeigt mehrere Regale 6, die durch an Aufnahmegeometrien 12 angeordneten Sicherheitsgeometrien 13 miteinander in Eingriff stehen. Die Regale weisen Holmen 14 auf, an welchen Regalfächer 15 angeordnet sind. An oberen Bereich der Holmen 14 sind Aufnahmegeometrien 12 mit Sicherungsgeometrien 13 angeordnet. Weiterhin sind die Regale 6 in am Boden angeordneten Sicherungsvorrichtungen 16 angeordnet. Die Regale 6 weisen weiterhin Rollen 17 auf.

Fig. 3 zeigt eine Draufsicht auf ein Regal 6. In jedem Eckbereich des Regals 6 sind Aufnahmegeometrien 12 mit Sicherungsgeometrien 13 angeordnet. Die Aufnahmegeometrie 12 weist weiterhin eine Findegeometrie 18 auf. Die Findegeometrie 18 ist hierbei als Durchgangsloch ausgeführt.

Die Sicherungsgeometrien 13 weisen zwei Ausführungsformen auf, die miteinander interagieren können. Eine erste Ausführungsform weist die Sicherungsgeometrie 13 einen Vorsprung 13A auf, der mit einer Ausnehmung 13B einer zweiten Ausführungsform der Sicherungsgeometrie 13 lösbar in Eingriff stehen kann. Dabei kann eine Sicherungsgeometrie 13 einen Vorsprung 13B und eine Ausnehmung 13D aufweisen.

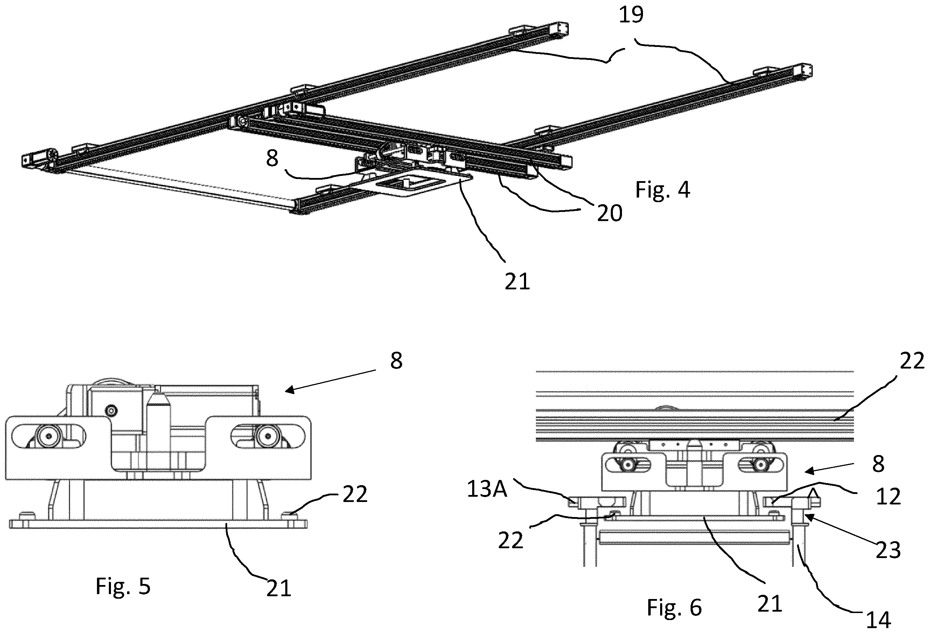

Fig. 4 zeigt eine Bewegungsvorrichtung 7 mit zwei ersten Linearachsen 19 und zwei zweiten Linearachsen 20 auf. An den zweiten Linearachsen 20 ist die Hubeinheit 8 angeordnet. Die Hubeinheit 8 weist weiterhin eine Hubgeometrie 21 auf, die dabei senkrecht zu den beiden Linearachsen 19, 20 bewegt werden kann. Weiterhin kann die Hubeinheit 8 entlang der zweiten Linearachse 20 bewegt werden, wobei die zweite Linearachse 20 entlang der ersten Linearachse 19 bewegt werden kann. Die erste Linearachse 19 ist dabei in Fahrtrichtung des Fahrzeugs 1 angeordnet und die zweite Linearachse 20 ist quer zur Fahrtrichtung des Fahrzeugs 1 angeordnet.

Fig. 5 zeigt die Hubeinheit 8 mit der Hubgeometrie 21. An der Hubgeometrie 21 ist eine Suchgeometrie 22 angeordnet. Durch einen nicht dargestellten Hubmechanismus ist die Hubgeometrie 21 in Schwerkraftrichtung oder senkrecht zur ersten und zweiten Linearachse 19, 20 bewegbar.

Fig. 6 zeigt die Hubeinheit 8 mit der Hubgeometrie 21, wobei die Hubgeometrie zwischen Holmen 14 eines Regals 6 unterhalb der Aufnahmegeometrie 12 angeordnet ist. Deutlich zu erkennen ist, dass die Hubgeometrie 21 zum Teil mit der Aufnahmegeometrie 12 überlappt. Zum Anheben des Regals 6 wird die Hubgeometrie in Schwerkraftrichtung nach oben bewegt, sodass die Hubgeometrie 21 mit der Aufnahmegeometrie 12 in Eingriff steht. Dabei interagiert die in dieser Fig. nicht dargestellte Findegeometrie 18 mit der Suchgeometrie 22, sodass eine formschlüssige, lösbare Verbindung zwischen der Hubgeometrie 21 und den Aufnahmegeometrien 12 besteht. Die Position, in der das Regal 6 durch die Hubgeometrie 21 angehoben ist, wird im Folgenden als Hubposition bezeichnet.

Weiterhin ist in Fig. 6 eine Aussparung 23 an den Holmen 14 zu erkennen. Die Aussparung 23 beschreibt im Wesentlichen einen Absatz des Homes 14, sodass die zwei nach außen zeigenden Seiten des Holmes 14 um eine gewisse Distanz nach Innen versetzt sind. Die Aussparung 23 ermöglicht, dass ein Regal 6 in Hubposition an einem weiteren Regal 6 in einer Sicherungsposition vorbei bewegt kann. Die Sicherungsposition beschreibt eine Position, in der das Regal 6 nicht mit der Hubeinheit 8 beziehungsweise der Hubgeometrie 21 in Eingriff steht, sondern die die Sicherungsgeometrie 13 des Regals 6 mit einer weiteren Sicherungsgeometrie 13 eines zweiten Regals 6 und/oder, einer nicht dargestellten Haltevorrichtung an einer nicht dargestellten Begrenzung des Regalaufnahmeraumes 5, und/oder das Regal 6 in einer Sicherungsposition ist mit einer Sicherungsvorrichtung 16 in Eingriff steht.

Weiterhin ist in Fig. 6 eine Durchfahrposition der Hubeinheit 8 beziehungsweise der Hubgeometrie 21 dargestellt. Die Hubgeometrie 21 kann in Schwerkraftrichtung unterhalb der Aufnahmegeometrie 12 bewegt werden, wobei die Hubgeometrie 21 zwischen den Holmen 14 eines Regals 6 bewegt wird.

Die Suchgeometrie 22 und die Findegeometrie 18 werden im Rahmen der Überführung des Regals 6 von der Sicherungsposition in die Hubposition in Eingriff gebracht. In den Hubpositionen liegt also ein Formschluss zwischen den Aufnahmegeometrien 12 des Regals 6 und der Hubgeometrie 21 vor. Durch die Suchgeometrie 22 und die Findegeometrie 18 wird ein sicheres Einhaken der Hubgeometrie 21 an den entsprechenden Aufnahmegeometrien 12 erreicht. Ein Verrutschen der Hubgeometrie 21 relativ zu den entsprechenden Aufnahmegeometrien 12 wird somit verhindert.

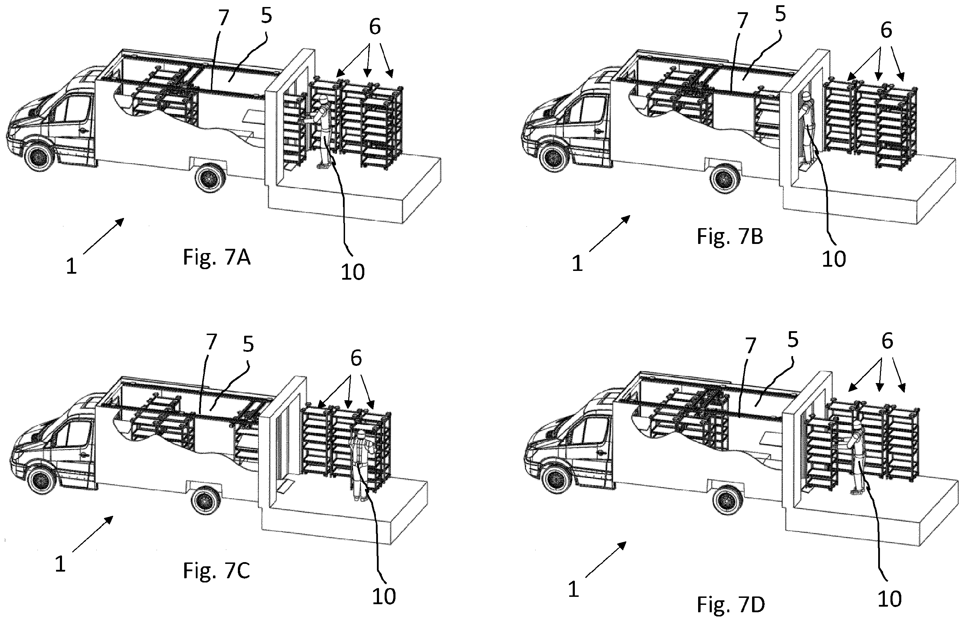

In den Figuren 7A - 7D wird ein Einlagerprozess eines Regals 6 in den Regalaufnahmeraum dargestellt. In Fig. 7A wird ein Regal 6 beispielsweise von dem Fahrer 10 in den Regalaufnahmeraum 5 gefahren. Dabei positioniert der Fahrer 10 das Regal 6 im Regalaufnahmeraum 5 in einer Übergabeposition, wie es in Fig. 7B dargestellt ist. Fig. 7C zeigt, wie das Regal 6 von der Übergabeposition auf einen vorgesehenen Regalplatz überführt wird. Dazu interagiert die Bewegungsvorrichtung 7, insbesondere die Hubeinheit 8, mit dem Regal 6. Anschließend kann der Fahrer 10, wie in Fig. 7D dargestellt, ein weiteres Regal 6 auf die Übergabeposition positionieren. Der Kreislauf beginnt von vorne.

Zum Auslagern eines Regals 6 aus dem Regalaufnahmeraum 5 wird das Regal 6 in der Übergabeposition durch die Bewegungsvorrichtung 7, insbesondere der Hubeinheit 8, positioniert. Dort wird das Regal 6 von der Bewegungsvorrichtung 7 freigegeben, sodass der Fahrer 10 das Regal 6 aus dem Regalaufnahmeraum 5 entnehmen kann.

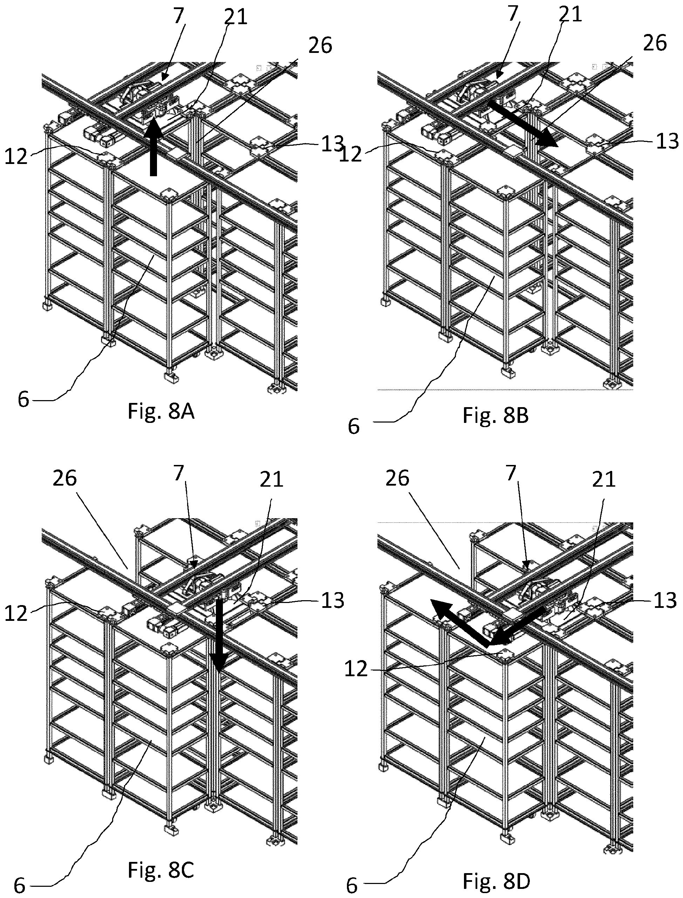

In den Figuren 8A - 8D ist das Prinzip eines Schiebelagersystems verdeutlicht. Das Schiebelagersystem folgt demselben Prinzip wie ein Schiebepuzzle. Dabei weist der Regalaufnahmeraum 5 eine gewisse Anzahl von Regalplätzen auf. In jedem Regalaufnahmeplatz kann ein Regal 6 angeordnet werden. Damit die angeordneten Regale 6 verschoben oder bewegt werden können, muss ein Regalplatz freigehalten werden. In diesen Regalplatz können benachbarte Regale 6 bewegt werden. Dadurch kann iterativ die Ordnung der Regale 6 innerhalb des Regalaufnahmeraumes 5 verändert werden. Dazu verfährt die Bewegungsvorrichtung 7 zunächst die Hubgeometrie 21 auf eine Position eines Regals 6, das neben dem freien Regalplatz 26 angeordnet ist. Anschließend hebt die Hubeinheit 8 in Verbindung mit der Hubgeometrie 21 und den Aufnahmegeometrien 12 das Regal aus der Sicherungsposition in die Hubposition. Dies ist in Figur 8A dargestellt.

Anschließend wird das Regal 6 in der Hubposition durch die Bewegungsvorrichtung 7 auf den freien Regalplatz 26 überführt. Dabei sind die Sicherungsgeometrien 13 der umliegenden Regale 6 auf Höhe der Aussparung 23, sodass die Sicherungsgeometrien 13 der Regale 6 der Sicherungsposition nicht mit dem Regal 6 in Hubposition kollidieren. Dies ist in Figur 8B dargestellt.

In Fig. 8C ist dargestellt, wie das Regal 6 von der Hubposition in eine Sicherungsposition überführt wird. Dazu senkt die Hubeinheit 8 die Hubgeometrie 21 und damit das Regal 6 in Verbindung mit den Aufnahmegeometrien 12 ab. Nun befindet sich das Regal 6 auf dem ehemals freien Regalplatz. Der freie Regalplatz und das verschobene Regal 6 haben somit Plätze getauscht.

Die Hubeinheit 8 kann nun weiterverfahren und ein Regal 6, das nun benachbart zum neuen freien Regalplatz 26 angeordnet ist, verschieben. Dies ist in Figur 8D dargestellt.

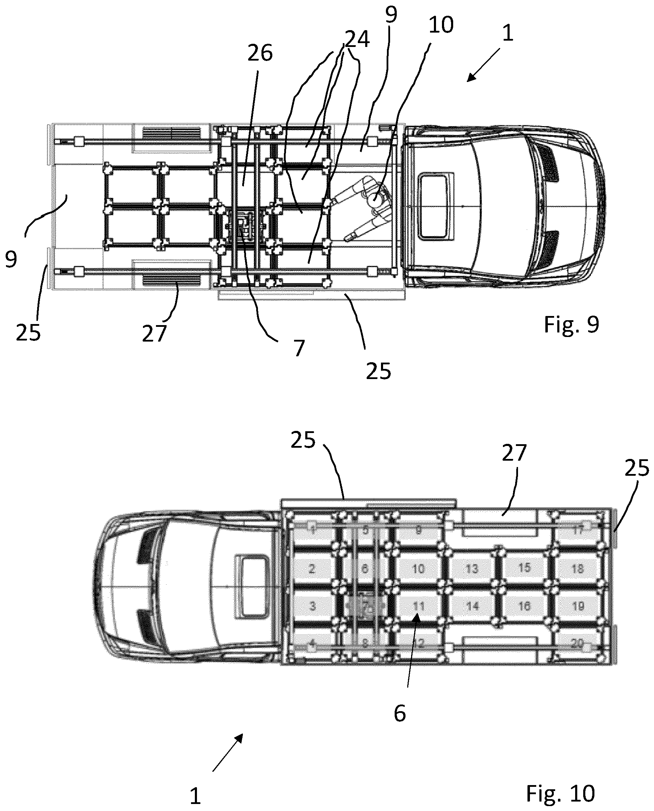

In Fig. 9 ist eine beispielhafte Integration der Lageranordnung in dem Fahrzeug 1 dargestellt. Zwischen dem Fahrerhaus 2 und dem Regalaufnahmeraum 5 ist der Bedienraum 11 angeordnet. In dem Bedienraum 11 kann weiterhin ein manuelles Lagerplatzsystem 9 angeordnet sein. Weiterhin kann der Fahrer 10 von dem Bedienraum 11 auf mehrere Regale 6 zugreifen. Diese Regale 6 befinden sich auf einer Entnahmeposition 24. Der Fahrer 10 kann durch eine seitlich angeordnete Tür 25 den Bedienraum 11 nach außen hin verlassen, oder den Bedienraum 11 von außen her betreten.

Weiterhin ist in Fig. 9 das implementierende Schiebelagersystem dargestellt. Der Regalaufnahmeraum 5 weist einen freien Regalstellplatz 26 auf. In diesen freien Regalstellplatz 26 kann ein angrenzendes Regal 6 verschoben werden. Dadurch können nacheinander die Positionen der einzelnen Regale 6 verändert werden.

Im hinteren Bereich des Transportraumes 3 kann ein weiteres manuelles Lagerplatzsystem 9 angeordnet sein. Dieses manuelle Lagerplatzsystem 9 ist durch eine weitere Tür 25 von außen zugänglich.

Fig. 10 zeigt eine weitere Implementierungsmöglichkeit der Lageranordnung in einem Fahrzeug 1. Dabei füllt der Regalaufnahmeraum 5 den kompletten Transportraum 3 des Fahrzeuges 1. Hierbei sind im Bereich der Radhäuser 27 keine Regalplätze vorgesehen. Dies ist der Fall, wenn die Radhäuser 27 in den Transportraum 3 hineinragen. Wenn keine Radhäuser 27 in den Transportraum 3 hineinragen können an diesen Stellen weitere Regalplätze vorgesehen werden.

Im Folgenden wird nun die Funktion der Lageranordnung anhand des dargestellten Fahrzeuges 1 im Rahmen einer Paketauslieferung beschrieben. An einer Ausgangsstation, beispielsweise einem Paketzentrum, werden Regale 6 mit auszuliefernden Paketen bestückt. Dazu kann sowohl das Paket als auch das Regal 6 durch einen entsprechenden Barcode identifiziert werden, wobei das Paket einem entsprechendem Regal 6 zugeordnet wird. Die mit Paketen bestückten Regale 6 werden für eine jeweilige Route zusammengestellt und sind bereit zur Abholung durch den Fahrer 10 und seinem Fahrzeug 1.

Zu Beginn seiner Schicht fährt der Fahrer 10 mit seinem Fahrzeug 1 an eine Ladestation des Paketzentrums, um die für ihn vorbreiteten Regale 6 in den Regalaufnahmeraum 5 zu überführen. Dazu schiebt der Fahrer 10 das Regal 6 in die Übergabeposition innerhalb des Regalaufnahmeraumes 5. Von dort übernimmt die Bewegungsvorrichtung 7 das Regal 6 an den dafür vorgesehenen Aufnahmegeometrien 12.

Innerhalb des Regalaufnahmeraumes 5 bewegt die Bewegungsvorrichtung 7 das Regal 6 zu einer vorgesehenen Position. An dieser Position setzt die Bewegungsvorrichtung 7 das Regal 6 ab, sodass Sicherungsgeometrien 13 mit nicht dargestellten Haltegeometrien der Begrenzung des Regalaufnahmeraumes 5 interagieren. Weiterhin wird das Regal 6 in an Boden des Regalaufnahmeraumes 5 vorgesehenen Sicherungsvorrichtungen 16 eingesetzt.

In der Zwischenzeit kann der Fahrer 10 ein weiteres Regal 6 auf die Übergabeposition überführen.

Sobald die Bewegungsvorrichtung das zuerst eingelagerte Regal 6 an seine Zielposition überführt hat, setzt die Bewegungsvorrichtung 7 das Regal 6 ab. Anschließend verfährt die Bewegungsvorrichtung 7 zu dem jetzt auf der Übergabeposition befindlichen Regal 6. Dort hebt die Hubeinheit 8 das Regal 6 an und verfährt dieses zu einer vorgegebenen Position. Diese Position ist beispielsweise benachbart zu dem zuerst eingelagerten Regal 6. Dort angekommen setzt die Bewegungsvorrichtung das Regal so ab, dass die Sicherungsgeometrien 13 der beiden Regale 6, des zuerst eingelagerten Regals und des zweiten eingelagerten Regales 6, miteinander interagieren. Nun kann der Fahrer 10 weitere Regale 6 in der gleichen Art und Weise in den Regalaufnahmeraum 5 überführen.

Die Reihenfolge des Einladens der Regale 6 ist egal, da diese während einer Fahrt zu den verschiedenen Zielpunkten durch die Bewegungsvorrichtung 7 sortiert bzw. geordnet werden. Regale 6 mit Paketen, die zuerst ausgeliefert werden, können dabei auch in eine Entnahmeposition durch die Bewegungsvorrichtung 7 überführt werden.

Der Regalaufnahmeraum 5 fasst dabei eine maximale Anzahl von Regalen 6, wobei für das Schiebelagersystem ein Regalplatz 26 freigehalten werden muss.

Sind nun alle Regale 6 in den Regalaufnahmeraum 5 überführt, kann der Fahrer 10 seine Tour starten. Auf dem Weg zum ersten Zielort werden die Regale 6 so sortiert, dass der Fahrer 10 auf das auszuliefernde Paket zugreifen kann. Dafür wird das entsprechende Regal 6 in eine Entnahmeposition 24 überführt. Der Fahrer 10 kann ausgehend vom Bedienraum 11 auf die Regalfächer eines Regals 6, das sich in einer Entnahmeposition befindet, zugreifen. Der Fahrer 10 entnimmt also das aufzuliefernde Paket und übergibt dieses an einen Empfänger. Anschließend fährt der Fahrer zum nächsten Ziel.

In der Zwischenzeit, zwischen der Abfahrt vom ersten Zielort bis zur Ankunft am zweiten Zielort, werden die Regale 6 im Regalaufnahmeraum 5 so sortiert, dass der Fahrer 10 Zugriff auf das nächste auszuliefernde Paket hat. Auch hierfür wird das entsprechende Regal 6 in eine Entnahmeposition 24 überführt.

Diese Vorgehensweise wird solange wiederholt, bis der Fahrer 10 alle Pakete aufgeliefert hat, oder seine Tour zu Ende ist. Dann fährt der Fahrer 10 zurück zum Ausgangspunkt.

Am Paketzentrum angekommen überführt die Bewegungsvorrichtung ein Regal 6 nach dem anderen auf die Übergabeposition, von welcher der Fahrer 10 das Regal 6 aus dem Regalaufnahmeraum 5 entnehmen kann.

Während die Regale 6 im Regalaufnahmeraum 5 angeordnet sind, sichern sich benachbarte Regale 6 durch die Sicherungsgeometrien 13 gegenseitig. Dadurch bleibt jedes Regal 6 an seiner angestammten Position, bis es durch die Bewegungsvorrichtung 7 angehoben und bewegt wird. Ein unbeabsichtigtes Verrutschen beziehungsweise Bewegen der Regale 6 kann somit vermieden werden. Durch die Interaktion der Regale 6 mit der in Schwerkraftrichtung oben drüber angeordneten Bewegungsvorrichtung erlaubt weiterhin eine schnelle und einfache Umsortierung der Regale 6 im Regalaufnahmeraum 5.

### Bezugszeichenliste

- 1: Fahrzeug
- 2: Fahrerhaus
- 3: Transportraum
- 4: Bewegungsraum
- 5: Regalaufnahmeraum
- 6: Regal
- 7: Bewegungsvorrichtung
- 8: Hubeinheit
- 9: manuelles Lagerplatzsystem
- 10: Fahrer
- 11: Bedienraum
- 12: Aufnahmegeometrie
- 13: Sicherungsgeometrie
- 13A: Vorsprung
- 13B: Ausnehmung
- 14: Holm
- 15: Regalfach
- 16: Sicherungsvorrichtung
- 17: Rolle
- 18: Findegeometrie
- 19: erste Linearachse
- 20: zweite Linearachse
- 21: Hubgeometrie
- 22: Suchgeometrie
- 23: Aussparung
- 24: Entnahmeposition
- 25: Tür
- 26: Freier Regalplatz
- 27: Radhaus

## Patentansprüche

1. Lageranordnung mit einem Regalaufnahmeraum (5) und einem Bewegungsraum (4), wobei der Regalaufnahmeraum (5) wenigstens ein bewegbares Regal (6) aufweist, und wobei der Bewegungsraum (4) eine Bewegungsvorrichtung (7) umfasst, die mit dem wenigstens einem Regal (6) interagiert, wobei der Bewegungsraum (4) in Schwerkraftrichtung oberhalb des Regalaufnahmeraums (5) angeordnet ist, wobei die Bewegungsvorrichtung (7) mit dem wenigstens einen Regal (6) lösbar in Eingriff steht, wobei die Bewegungsvorrichtung (7) eine zwangsgeführte Hubeinheit (8) aufweist, die entlang zweier winklig, vorzugsweise im Wesentlichen rechtwinklig, zueinander angeordneter Bewegungsachsen bewegbar ist, und wobei die Hubeinheit (8) senkrecht zu den beiden Bewegungsachsen bewegbar ist, und wobei das wenigstens eine Regal (6) eine Aufnahmegeometrie (12) aufweist, die mit einer Hubgeometrie (21) der Hubeinheit (8) der Bewegungsvorrichtung (7) lösbar zusammenwirkt,
**dadurch gekennzeichnet, dass**
die Aufnahmegeometrie (12) eine vom Regal (6) nach außen angeordnete erste Sicherungsgeometrie (13) aufweist, die mit einer zweiten Sicherungsgeometrie (13) einer Aufnahmegeometrie (12) eines benachbarten Regals (6) in einer Sicherungsposition lösbar in Eingriff steht.

2. Lageranordnung nach Anspruch 1, **dadurch gekennzeichnet, dass** die Hubgeometrie (21) in Schwerkraftrichtung unterhalb der Aufnahmegeometrie (12) bewegbar ist.

3. Lageranordnung nach Anspruch 1 oder 2, **dadurch gekennzeichnet, dass** die Hubgeometrie (21) eine Suchgeometrie (22) und die Aufnahmegeometrie (12) eine Findegeometrie (18) aufweisen.

4. Lageranordnung nach einem der Ansprüche 1 bis 3, **dadurch gekennzeichnet, dass** wenigstens eine Begrenzung des Regalaufnahmeraums (5) wenigstens eine Haltegeometrie aufweist, die mit einer Sicherungsgeometrie (13) des wenigstens einen Regals (6) zusammenwirkt.

5. Lageranordnung nach Ansprüchen 1 bis 4, **dadurch gekennzeichnet, dass** die Sicherungsgeometrie (13) eines ersten Regals (6) in einer Hubposition, in der das Regal (6) durch die Hubeinheit angehoben ist, an der Sicherungsgeometrie (13) und/oder Aufnahmegeometrie (12) eines zweiten Regals (6) in einer Sicherungsposition vorbei bewegbar ist.

6. Lageranordnung nach einem der Ansprüche 1 bis 5, **dadurch gekennzeichnet, dass** das wenigstens eine Regal (6) einen rechteckigen Grundriss mit einer Längenrichtung und einer Breitenrichtung aufweist, wobei in jedem Eckbereich ein Holm (14) vorgesehen ist, wobei an wenigstens einem Holm (14) in dessen in Schwerkraftrichtung oberen Bereich die Aufnahmegeometrie (12) angeordnet ist.

7. Lageranordnung nach Anspruch 6, **dadurch gekennzeichnet, dass** sich die Aufnahmegeometrie (12) in Längenrichtung und/oder in Breitenrichtung in Richtung auf einen der benachbarten Holme (14) erstreckt, bevorzugt in Längenrichtung und Breitenrichtung, besonders bevorzugt im Wesentlichen in Richtung der Mitte des Regals (6).

8. Lageranordnung nach einem der Ansprüche 1 bis 7, **dadurch gekennzeichnet, dass** ein Teil der Hubgeometrie (21) mit einem Teil der Aufnahmegeometrie (12) des wenigstens einen Regals (6) in der Hubposition überlappt.

9. Lageranordnung nach Anspruch 6 oder 7, **dadurch gekennzeichnet, dass** die Hubgeometrie (21) zwischen zwei benachbarten Holmen (14) des wenigstens einen Regals (6) in einer Sicherungsposition bewegbar ist.

10. Lageranordnung nach einem der Ansprüche 1 bis 9, **dadurch gekennzeichnet, dass** der Boden des Regalaufnahmeraums (5) wenigstens eine Sicherungsvorrichtung (16) für das wenigstens eine Regal (6) aufweist.

11. Lageranordnung nach einem der Ansprüche 1 bis 10, **dadurch gekennzeichnet, dass** die Hubeinheit (8) auf Linearachsen (19,20) bewegbar ist.

12. Lageranordnung nach einem der Ansprüche 1 bis 11, **dadurch gekennzeichnet, dass** die Lageranordnung mobil ist.

## Claims

1. A storage arrangement comprising a rack receiving space (5) and a movement space (4), wherein the rack receiving space (5) has at least one movable rack (6), and wherein the movement space (4) contains a movement device (7) which interacts with the at least one rack (6), wherein the movement space (4) is arranged above the rack receiving space (5) in the direction of gravity, wherein the movement device (7) is releasably engaged with the at least one rack (6),
wherein the movement device (7) has a positively guided lifting unit (8) which is movable along two axes of movement arranged at an angle, preferably substantially at right angles, to one another, and wherein the lifting unit (8) is movable perpendicularly to the two axes of movement. and wherein the at least one rack (6) has a receiving geometry (12) which releasably interacts with a lifting geometry (21) of the lifting unit (8) of the movement device (7), **characterized in that** the receiving geometry (12) has a first securing geometry (13) which is arranged outwards from the rack (6) and is engaged releasably with a second securing geometry (13) of a receiving geometry (12) of an adjacent rack (6) in a securing position.

2. The storage arrangement according to claim 1, **characterized in that** the lifting geometry (21) is movable in the direction of gravity below the receiving geometry (12).

3. The storage arrangement according to claim 1 or 2, **characterized in that** the lifting geometry (21) has a seeking geometry (22) and the receiving geometry (12) has a locating geometry (18).

4. The storage arrangement according to any one of claims 1 to 3, **characterized in that** at least one boundary of the rack receiving space (5) has at least one holding geometry which interacts with a securing geometry (13) of the at least one rack (6).

5. The storage arrangement according to claims 1 to 4, **characterized in that** in a lifting position in which the rack (6) is lifted by the lifting unit, the securing geometry (13) of a first rack (6) can be moved past the securing geometry (13) and/or receiving geometry (12) of a second rack (6) in a securing position.

6. The storage arrangement according to one of the claims 1 to 5, **characterized in that** the at least one rack (6) has a rectangular layout with a length direction and a width direction, wherein a column (14) is provided in each corner region, with the receiving geometry (12) being arranged on at least one of the columns (14) in its upper region in the direction of the force of gravity.

7. The storage arrangement according to claim 6, **characterized in that** the receiving geometry (12) extends in the length direction and/or in the width direction in the direction of one of the adjacent columns (14), preferably in the length direction and width direction, particularly preferably substantially in the direction of the center of the rack (6).

8. The storage arrangement according to any one of claims 1 to 7, **characterized in that** a part of the lifting geometry (21) overlaps a portion of the receiving geometry (12) of the at least one rack (6) in the lifting position.

9. The storage arrangement according to claim 6 or 7, **characterized in that** the lifting geometry (21) is movable between two adjacent columns (14) of the at least one rack (6) in a securing position.

10. The storage arrangement according to one of claims 1 to 9, **characterized in that** the floor of the rack receiving space (5) has at least one securing device (16) for the at least one rack (6).

11. The storage arrangement according to one of the claims 1 to 10, **characterized in that** the lifting unit (8) is movable on linear axes (19, 20).

12. The storage arrangement according to one of claims 1 to 11, **characterized in that** the storage arrangement is mobile.

## Revendications

1. Agencement d'étagère avec un espace de réception d'étagère (5) et un espace de déplacement (4), sachant que l'espace de réception d'étagère (5) comporte au moins une étagère mobile (6) et sachant que l'espace de déplacement (4) comprend un dispositif de déplacement (7), qui interagit avec au moins une étagère (6), sachant que l'espace de déplacement (4) est disposé en direction gravimétrique au-dessus de l'espace de réception d'étagère (5), sachant que le dispositif de déplacement (7) est en prise de façon amovible avec au moins une étagère (6), sachant que le dispositif de déplacement (7) comporte une unité de levage (8) à guidage forcé, qui peut être mobile le long de deux axes de déplacement disposés en angle, de préférence pour l'essentiel à angle droit l'un par rapport à l'autre et sachant que l'unité de levage (8) peut être mobile perpendiculairement aux deux axes de déplacement et sachant qu'au moins une étagère (6) comporte une géométrie de réception (12), qui coopère de façon amovible avec une géométrie de levage (21) de l'unité de levage (8) du dispositif de déplacement (7),
**caractérisé en ce que**
la géométrie de réception (12) comporte une première géométrie de sécurisation (13) disposée de l'étagère (6) vers l'extérieur, qui est en prise de façon amovible dans une position de sécurisation avec une deuxième géométrie de sécurisation (13) d'une géométrie de réception (12) d'une étagère voisine (6).

2. Agencement d'étagère selon la revendication 1, **caractérisé en ce que** la géométrie de levage (21) peut être mobile en direction gravimétrique en dessous de la géométrie de réception (12).

3. Agencement d'étagère selon la revendication 1 ou 2, **caractérisé en ce que** la géométrie de levage (21) comporte une géométrie de recherche (22) et la géométrie de réception (12) comporte une géométrie de repérage (18) .

4. Agencement d'étagère selon l'une quelconque des revendications 1 à 3, **caractérisé en ce qu'**au moins une limitation de l'espace de réception d'étagère (5) comporte au moins une géométrie de retenue, qui coopère avec une géométrie de sécurisation (13) d'au moins une étagère (6).

5. Agencement d'étagère selon les revendications 1 à 4, **caractérisé en ce que** la géométrie de sécurisation (13) d'une première étagère (6) dans une position dans laquelle l'étagère (6) est relevée par l'unité de levage, peut être mobile en passant dans une position de sécurisation dans la géométrie de sécurisation (13) et/ou la géométrie de réception (12) d'une deuxième étagère (6).

6. Agencement d'étagère selon l'une quelconque des revendications 1 à 5, **caractérisé en ce qu'**au moins une étagère (6) comporte une ligne d'ensemble rectangulaire avec une direction longitudinale et une direction en largeur, sachant que dans chaque zone angulaire un montant (14) est prévu, sachant que sur au moins un montant (14), la géométrie de réception (12) est disposée dans la zone supérieure de celui-ci en direction gravimétrique.

7. Agencement d'étagère selon la revendication 6, **caractérisé en ce que** la géométrie de réception (12) s'étend en direction longitudinale et/ou en direction de la largeur en direction d'un des montants voisins (14), de préférence en direction longitudinale et en direction de largeur, en particulier de préférence en direction pour l'essentiel du centre de l'étagère (6).

8. Agencement d'étagère selon l'une quelconque des revendications 1 à 7, **caractérisé en ce qu'**une partie de la géométrie de levage (21) chevauche dans la position de levage une partie de la géométrie de réception (12) d'au moins une étagère (6).

9. Agencement d'étagère selon la revendication 6 ou 7, **caractérisé en ce que** la géométrie de levage (21) est mobile dans une position de sécurisation entre deux montants (14) voisins d'au moins une étagère (6).

10. Agencement d'étagère selon l'une quelconque des revendications 1 à 9, **caractérisé en ce que** le fond de l'espace de réception d'étagère (5) comporte au moins un dispositif de sécurisation (16) pour au moins une étagère (6).

11. Agencement d'étagère selon l'une quelconque des revendications 1 à 10, **caractérisé en ce que** l'unité de levage (8) est mobile sur des axes linéaires (19, 20).

12. Agencement d'étagère selon l'une quelconque des revendications 1 à 11, **caractérisé en ce que** l'agencement d'étagère est mobile.
